# EUROPÄISCHE PATENTSCHRIFT

(11) **EP 1 715 973 B1**
(45) Veröffentlichungstag und Bekanntmachung des Hinweises auf die Patenterteilung: **07.04.2010**
(21) Anmeldenummer: 05707332.2
(22) Anmeldetag: 11.02.2005
(51) Int. Cl.: B23B 27/14, B23B 29/034

(54) **SCHNEIDPLATTE, INSBESONDERE FÜR EIN AUSDREHWERKZEUG**
CUTTING PLATE, PARTICULARLY FOR A BORING TOOL
PLAQUETTE DE COUPE, NOTAMMENT POUR UN OUTIL D'ALESAGE

(30) Priorität: 17.02.2004 DE 202004002491 U
(43) Veröffentlichungstag der Anmeldung: 02.11.2006
(73) Patentinhaber: KENNAMETAL INC., Latrobe, PA 15650-0231 (US)
(72) Erfinder: KRENZER, Ulrich, 90513 Zirndorf (DE); JUST, Werner, 91438 Bad Windsheim (DE)
(74) Vertreter: Freier, Rüdiger
(86) Internationale Anmeldenummer: PCT/EP2005/001386
(87) Internationale Veröffentlichungsnummer: WO 2005/080034

(56) Entgegenhaltungen:
- EP-A- 0 422 586
- WO-A-03/070404
- DE-A1- 2 414 232
- DE-A1- 10 234 030
- DE-U- 1 849 107
- US-A- 4 441 841
- US-A- 5 584 616
- PATENT ABSTRACTS OF JAPAN Bd. 013, Nr. 555 (M-904), 11. Dezember 1989 (1989-12-11) -& JP 01 228705 A (TOSHIBA CORP), 12. September 1989 (1989-09-12)
- PATENT ABSTRACTS OF JAPAN Bd. 017, Nr. 433 (M-1461), 11. August 1993 (1993-08-11) -& JP 05 096402 A (SUMITOMO HEAVY IND LTD), 20. April 1993 (1993-04-20)
- DATABASE WPI Section PQ, Week 198642 Derwent Publications Ltd., London, GB; Class P54, AN 1986-277594 XP002331839 -& SU 1 214 333 A (MOSCOW BAUMAN TECH COLL) 28. Februar 1986 (1986-02-28)
- SANDVIK COROMANT UK LTD: "Metalworking Products Rotating Tools" Februar 2001 (2001-02), SANDVIK COROMANT UK LTD , HALESOWEN, GREAT BRITAIN , XP002331838 Seite D23 - Seite D24

## Beschreibung

Die Erfindung bezieht sich auf eine Schneidplatte gemäß dem Oberbegriff des Anspruchs 1. Eine derartige Schneidplatte ist beispielsweise bekannt aus JP 01 228705 A (patent abstract of Japan, Bd. 013, Nr. 555 (M-904)). Sie bezieht sich weiter auf ein Ausdreh- oder Ausbohrwerkzeug, insbesondere mit Feineinstellung, mit einer solchen Schneidplatte.

Ein Ausdrehwerkzeug, insbesondere ein Feinbohrwerkzeug, weist üblicherweise eine Feineinstellvorrichtung auf, mit der eine am Werkzeugkopf in der Regel lösbar gehaltene Schneidplatte zum Drehen oder Bohren unterschiedlich großer Bohrdurchmesser bezogen auf die Werkzeuglängsachse in Radialrichtung verstellbar ist. Dazu bisher eingesetzte Schneidplatten oder Schneideinsätze sind häufig als Wendeschneidplatten ausgeführt. Diese weisen eine Plattenoberfläche und dieser gegenüberliegend eine weitere Plattenfläche oder Bodenfläche sowie sich an die Plattenoberfläche anschließende Plattenseitenflächen auf. Bei einer viereckigen oder rombischen Schneidplatte umfasst diese vier Plattenseitenflächen. Im Bereich einer Plattenecke, die auch eine Eckenschneidkante ausbilden kann, grenzen an diese eine Hauptschneidkante und eine Nebenschneidkante der Schneidplatte an.

Der Erfindung liegt die Aufgabe zu Grunde, eine verbesserte Schneidplatte, insbesondere für ein Ausdreh- oder Feinbohrwerkzeug, vorzugsweise mit Feineinstellvorrichtung, anzugeben. Des Weiteren soll ein Ausdrehwerkzeug mit einer solchen Schneidplatte insbesondere zum Finishing mit hoher Oberflächengüte oder -qualität angegeben werden.

Bezüglich der Schneidplatte wird die Aufgabe erfindungsgemäß gelöst durch die Merkmale des Anspruchs 1. Dazu weist die Schneidplatte im eckennahen Bereich eine Spanformstufe mit einem sich von der Nebenschneidkante bis zur Hauptschneidkante erstreckenden Stufengrund auf. Die nachfolgend auch als Hauptschneide bezeichnete Hauptschneidkante verläuft dabei gegenüber der Plattenoberfläche oder Deckfläche der Schneidplatte schräg in Richtung zum Stufengrund der Spanformstufe hin. Die nachfolgend auch als Nebenschneide bezeichnete, zweckmäßigerweise gerade Nebenschneidkante fällt zur Hauptschneide hin ab, wodurch an der Nebenschneide eine Wiper-Geometrie ausgebildet wird. Bevorzugt spannen daher die Hauptschneidkante und die Nebenschneidkante sowie der Stufengrund ein geschlossenes Dreieck auf.

In vorteilhafter Ausgestaltung bildet die Spanformstufe eine ausgehend von der Eckenschneidkante zum Stufengrund hin abfallende Spanfläche auf. Diese Spanfläche ist somit bezogen auf die Plattenoberfläche zur Plattenmitte hin geneigt. Die Spanformstufe bildet zudem einen nachfolgend als Spanrückenfläche bezeichneten Spanflächenrücken aus, der zweckmäßigerweise ausgehend vom Stufengrund zur Plattenoberfläche hin ansteigt, d.h. von der Plattenoberfläche zum Stufengrund hin abfällt. Dadurch ist eine Rückenoberkante der Spanrückenfläche gebildet, die in der Plattenebene verläuft. Diese Rückenoberkante sowie die Hauptschneidkante und die Nebenschneidkante spannen ebenfalls ein Dreieck auf.

Der Stufengrund der Spanformstufe ist bevorzugt rinnen- oder muldenartig mit gebogenem oder kreisförmigem Mulden- bzw. Rinnenscheitel ausgeformt. Der Stufengrund der Spanformstufe verläuft zweckmäßigerweise zur Hauptschneidkante unter einem Winkel zwischen 45° und 90°, insbesondere 70° ± 10°.

In besonders bevorzugter Ausgestaltung der Schneidplatte ist an deren Nebenschneidkante eine Wiperschneide, d.h. eine Schlicht- oder Planschneide in Wiper-Geometrie ausgebildet. Bevorzugt stehen die Hauptschneidkante und die Nebenschneidkante zueinander in einem Winkel von insbesondere ca. 80°.

Die vorzugsweise als Wendeschneidplatte ausgebildete Schneidplatte weist einen negativen Spannwinkel zwischen der Plattenoberfläche und einer an der Nebenschneidkante zur Eckenschneidkante hin verlaufenden Nebenschneide auf, der bevorzugt zwischen -6° und -20° beträgt. Ein positiver Span- oder Seitenspanwinkel zwischen der Plattenoberfläche und dem Stufengrund der Spanformstufe beträgt zweckmäßigerweise zwischen +6° und +30°.

Bezüglich des Ausdrehwerkzeuges umfasst dieses zweckmäßigerweise eine Feineinstellvorrichtung sowie eine erfindungsgemäße Schneidplatte, die am Ausdrehwerkzeug lösbar gehalten ist. Das Ausdrehwerkzeug kann dabei mit einem auswechsel- oder austauschbaren Bohr- oder Drehkopf versehen sein, an dem die Schneidplatte lösbar gehalten ist. Auch kann die Schneidplatte auswechselbar gehalten sein in einer Plattenkassette, die ihrerseits am Umfang des Ausdrehwerkzeugs bzw. eines Feinbohr- oder Feindrehkopfes lösbar befestigt ist.

Die mit der Erfindung erzielten Vorteile bestehen darin, dass insbesondere bei Einsatz einer erfindungsgemäßen Schneidplatte in einem Feindreh- oder Feinbohrwerkzeug ein vergleichsweise hoher oder großer Vorschub (oder ein vergrößertes 1/d-Verhältnis) ermöglicht wird, wobei Vibrationsprobleme oder Ungenauigkeiten vermieden sind. Zudem wird bei Einsatz der Schneidplatte mit der an der Hauptschneidkante wirksamen Spanformstufe und insbesondere in Verbindung mit der Wiper-Geometrie an der Nebenschneidkante erreicht, dass der beim Bohren bzw. Drehen gebildete Span beim spanabhebenden Feinausdrehen oder Feinbohren zuverlässig von der Bohrungswand zum Zentrum hin geführt wird, ohne dabei die bearbeitete Bohroberfläche zu beschädigen, z.B. zu verkratzen.

Eine durch Verwendung einer erfindungsgemäßen Schneidplatte erzielte besonders feine oder glatte Oberfläche hoher Oberflächengüte oder -qualität mit besonders geringer Oberflächenrauhigkeit beim Ausdrehen oder Feinausbohren eines Werkstücks, d. h. insbesondere beim Finishing, wird vorteilhafterweise auch dadurch erreicht, dass die Spanformstufe auf Grund deren erfindungsgemäßer Geometrie nicht parallel zur Hauptschneidkante, sondern vielmehr zu dieser unter einem Winkel von 45° bis kleiner 90° verläuft.

Ausführungsbeispiele der Erfindung werden anhand einer Zeichnung näher erläutert. Darin zeigen:
- Fig. 1: eine erfindungsgemäße Schneidplatte in Draufsicht,
- Fig.2: in einem Ausschnitt II aus Fig. 1 in größerem Maßstab die Schneid- platte im Bereich einer Plattenecke mit einer erfindungsgemäßen Spanformstufe,
- Fig. 3: die Schneidplatte in einer Seitenansicht auf die Spanformstufe,
- Fig. 4 und 5: verschiedene Detailansichten der Schneidplatte,
- Fig. 6 bis 12: Darstellungen verschiedener Ansichten der Schneidplatte, insbe- sondere im Bereich der Spanformstufe,
- Fig. 13: ein Ausdrehwerkzeug mit Feineinstellvorrichtung und einsetzbarem Werkzeug- oder Bohrkopf,
- Fig. 14: einen Dreh- oder Bohrkopf für ein Ausdrehwerkzeug nach Fig. 13 mit erfindungsgemäßer Schneidplatte, und
- Fig. 15: in perspektivischer Explosionsdarstellung ein fein einstellbares Ausdreh- oder Bohrwerkzeug mit lösbarer Plattenkassette und darin lösbar gehaltener erfindungsgemäßer Schneidplatte.

Einander entsprechende Teile sind in allen Figuren mit den gleichen Bezugszeichen versehen.

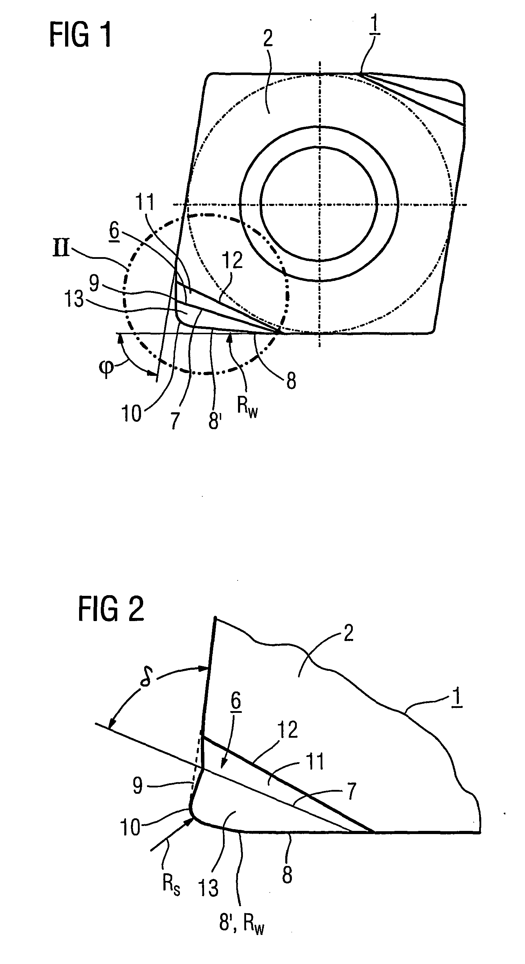

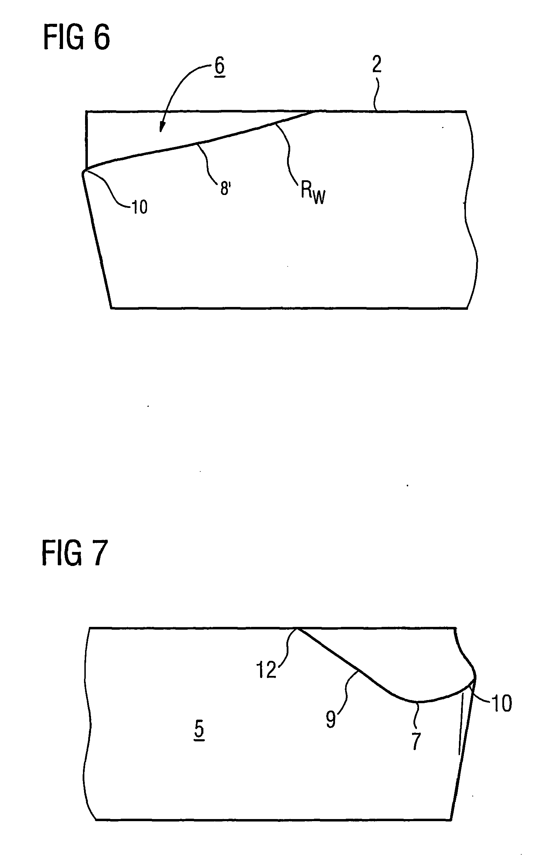

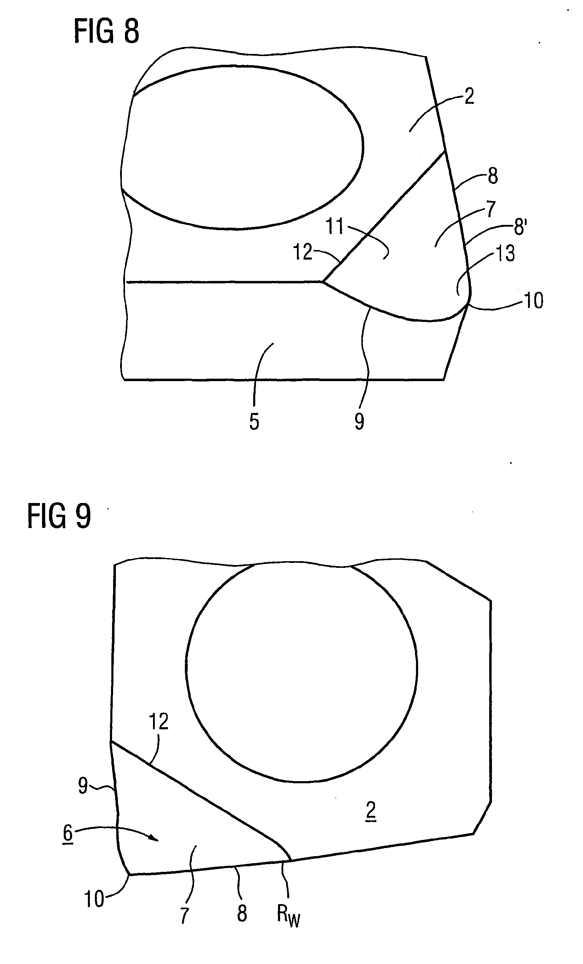

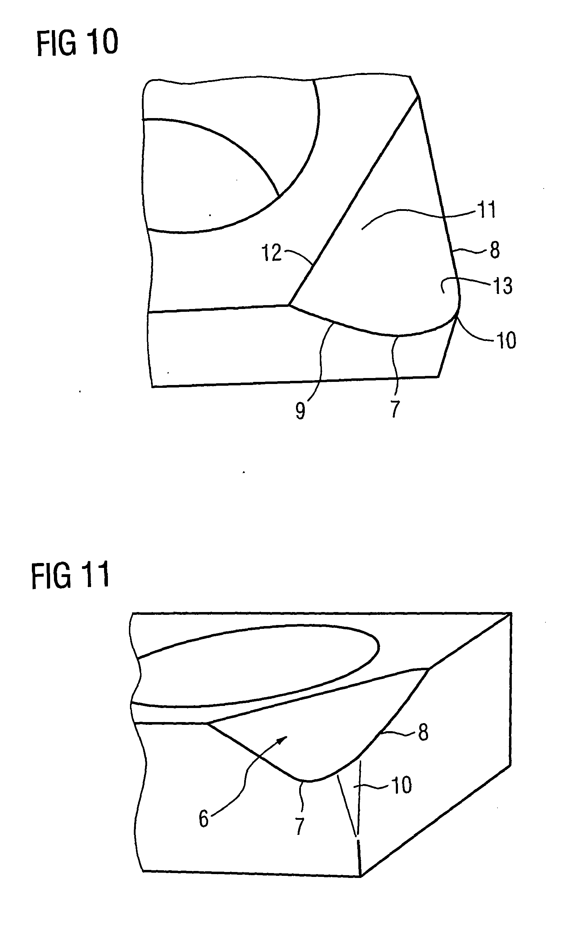

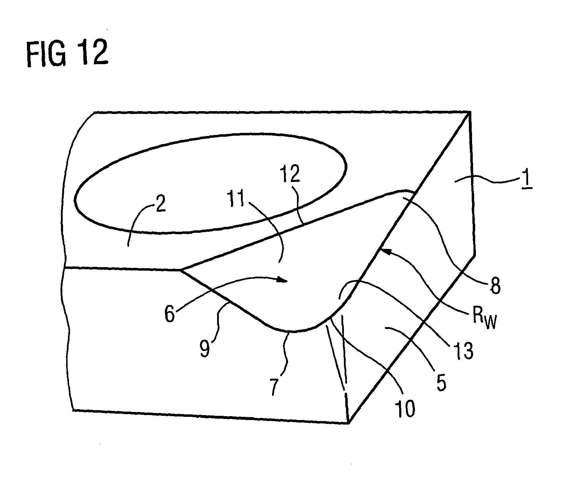

Die in den Figuren 1 bis 12 in verschiedenen Ansichten gezeigte Schneidplatte 1 weist eine Plattenoberfläche 2 und eine nachfolgend als Bodenfläche bezeichnete weitere Plattenoberfläche 4 sowie vier Plattenseitenflächen 5 auf. Diese verlaufen zwischen den beiden Plattenoberflächen 2 und 4 bevorzugt unter einem spitzen bzw. stumpfen Winkel. Die Form der Schneidplatte 1 kann auch rombisch, dreieckig oder vieleckig, z.B. sechseckig, sein.

Im eckennahen Bereich der Schneidplatte 1 ist eine Spanformstufe 6 vorgesehen. Diese bildet einen Stufengrund 7 aus, der sich von einer Nebenschneidkante 8 bis zu einer Hauptschneidkante 9 der Schneidplatte 1 hin erstreckt. In diesem eckennahen Bereich, wie dieser in Figur 2 in größerem Maßstab gezeigt ist, weist die Schneidplatte 1 eine Eckenschneidkante 10 auf. Diese ist mit einem bestimmten Ecken- oder Plattenradius, z.B. (Rₛ = 0,4), versehen und somit abgerundet.

Wie insbesondere aus den Figuren 1 und 2 sowie 8 bis 12 ersichtlich ist, spannen die Nebenschneidkante 8 und die Hauptschneidkante 9 sowie der Stufengrund 7 ein Dreieck oder eine Dreiecksfläche auf. Ein sich vom Stufengrund 7 zur Plattenoberfläche 2 hin erstreckender Spanflächenrücken 11 der Spanformstufe 6 bildet an der Plattenoberfläche 2 eine Rückenoberkante 12. Diese Rückenoberkante 12 spannt mit der Nebenschneidkante 8 und der Hauptschneidkante 9 ebenfalls ein Dreieck oder eine Dreiecksfläche auf. Dabei steigt der Spanflächenrücken 11 ausgehend vom Stufengrund 7 zur Plattenoberfläche 2 hin an. Mit anderen Worten: Der Spanflächenrücken 11 fällt ausgehend von der Rückenoberkante 12 an der Plattenoberfläche 2 zum Stufengrund 7 hin ab.

Die Spanformstufe 6 bildet zudem eine Spanfläche 13 aus. Diese erstreckt sich wiederum dreieck- oder dreieckflächenförmig zwischen dem Stufengrund 7 und der Hauptschneidkante 9 sowie der Nebenschneidkante 8. Die Spanfläche 13 fällt ausgehend von der Eckenschneidkante 10 zum Stufengrund 7 hin ab. Mit anderen Worten: Die Spanfläche 13 ist ausgehend von der Eckenschneidkante 6 zur Plattenoberfläche 2 geneigt.

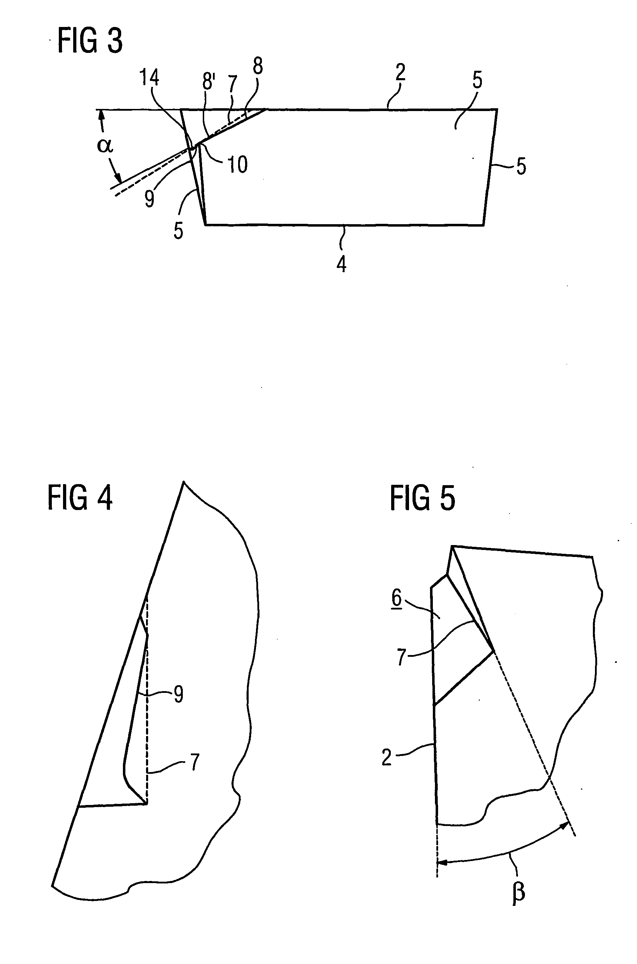

Wie aus den Figuren 3 sowie 7 bis 12 ersichtlich ist, ist der Stufengrund rinnen- oder muldenartig ausgeformt. Der Stufengrundboden 14 des Stufengrundes 7 ist somit bezogen auf die Plattenoberfläche 2 konvex gewölbt, d.h. in die Schneidplatte 1 hinein ausgemuldet oder in die Schneidplatte 1 hinein muldenartig und dabei bogenförmig eingezogen.

Wie aus Fig. 1 ersichtlich ist, verlaufen die Nebenschneidkante 8 und die Hauptschneidkante 9 zueinander in einem spitzen Winkel ϕ, bevorzugt mit ϕ = 80°. Ein gemäß Fig. 2 zwischen der Plattenoberfläche 2 und einer Nebenschneide 8' im Verlauf der Nebenschneidkante 8 zur Eckenschneidkante 10 hin negativer Spanwinkel α beträgt besonders bevorzugt zwischen a = -6° und α = -20°. Ein positiver Seiten- oder Seitenspanwinkel β zwischen der Plattenoberfläche 2 und dem Stufengrund 7 der Spanformstufe 6 beträgt bevorzugt zwischen β = +6° und β = 30°.

Die Nebenschneidkante 8 ist in Wiper-Geometrie R_{w} ausgebildet. In dieser Wiper-Geometrie wirkt die Nebenschneidkante 8 bzw. die Nebenschneide 8' als Schlicht- oder Planschneide. Der Wiper-Radius R_{w} beträgt dabei R_{w} = 5,0. Die Hauptschneidkante 9 verläuft dabei gegenüber der Plattenoberfläche oder Deckfläche 2 der Schneidplatte 1 schräg in Richtung zum Stufengrund 7 der Spanformstufe 6 hin. Die Nebenschneidkante 8 ist gerade und fällt zur Hauptschneidkante 9 hin ab und bildet dadurch an der Nebenschneidkante oder Nebenschneide 9 die Wiper-Geometrie aus. Bevorzugt spannen daher die Hauptschneidkante 9 und die Nebenschneidkante 8 sowie der Stufengrund 7 ein geschlossenes Dreieck auf.

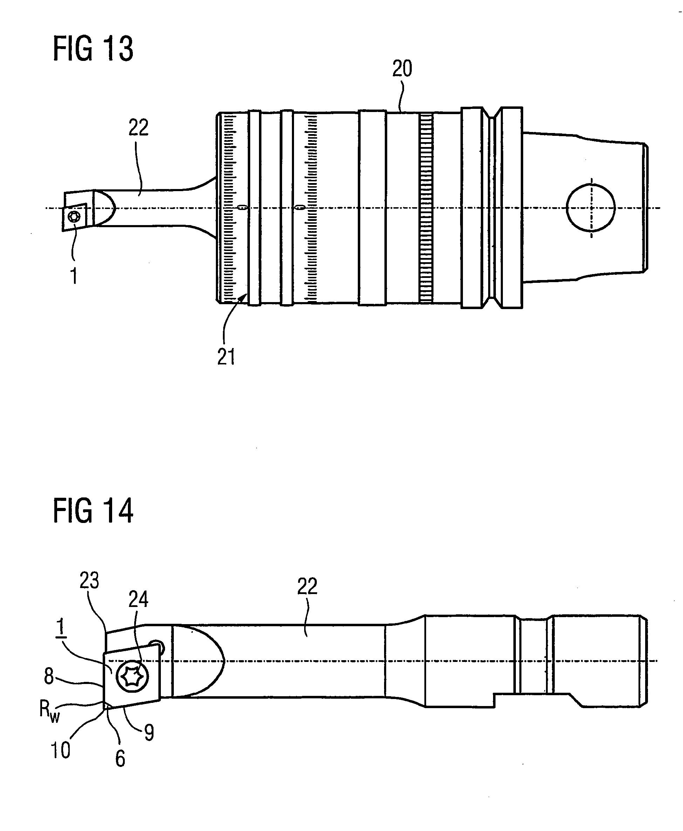

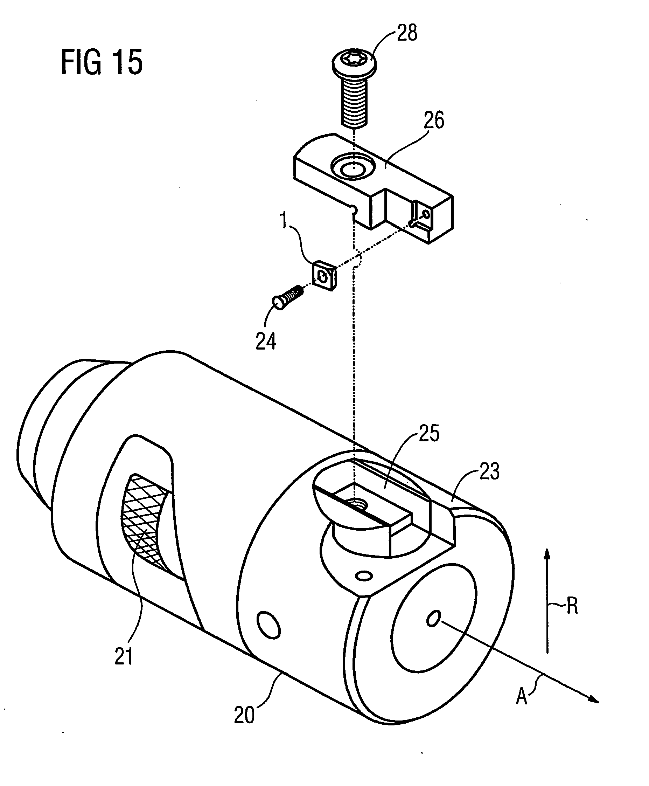

Die Figuren 13 und 15 zeigen jeweils ein Ausdrehwerkzeug 20 mit einer Feineinstellvorrichtung 21. Mit dieser Feineinstellvorrichtung 21 wird die an dem Ausdreh- oder Feinbohrwerkzeug 20 lösbar gehaltene erfindungsgemäße Schneidplatte 1 in Radialrichtung R, d.h. quer zur Achsrichtung A des Werkzeuges 20 fein eingestellt. Mittels dieser Feineinstellung können unterschiedliche Bohrungsdurchmesser gebohrt oder gedreht werden.

Bei dem in Fig. 13 dargestellten Ausdrehwerkzeug 20 ist in dieses ein in Fig. 14 in größerem Maßstab dargestellter Bohrkopf 22 eingesetzt. Dieser trägt am Schneid- oder Kopfende 23 umfangsseitig die erfindungsgemäße Schneidplatte 1 mit der Spanformstufe 6 und der Wiper-Geometrie 8', R_{w} an der Nebenschneidkante 8. Dabei ist die Schneidplatte 1, z.B. mittels einer Schraube 24, am stirnseitigen Kopfende 23 des Bohrkopfes 22 lösbar gehalten.

Bei dem in Fig. 15 dargestellten Ausdrehwerkzeug 20 ist dieser am stirnseitigen Kopfende 23 mit einer Ausnehmung 25 zur Aufnahme einer Plattenkassette 26 ausgebildet. Diese weist eine Plattenausnehmung 27 zur Aufnahme der erfindungsgemäßen Schneidplatte 1 auf, die dort wiederum mittels einer Schraube 24 lösbar gehalten ist. Die Plattenkassette 26 wird ebenfalls, z.B. mittels einer Schraube 28, am Außenumfang des Ausdrehwerkzeuges 20 lösbar gehalten.

## Patentansprüche

1. Schneidplatte (1) mit einer Plattenoberfläche (2) und Plattenseitenflächen (5) sowie mit einer über eine Eckenschneidkante (10) an eine Nebenschneidkante (8) angrenzenden Hauptschneidkante (9) und eine im eckennahen Bereich vorgesehene Spanformstufe (6) mit einem sich von der Nebenschneidkante (8) zur Hauptschneidkante (9) erstreckenden Stufengrund (7),
**gekennzeichnet durch**
einen negativen Spanwinkel (α) zwischen der Plattenoberfläche (2) und einer Nebenschneide (8') im Verlauf der Nebenschneidkante (8) zur Eckenschneidkante (10) hin.

2. Schneidplatte nach Anspruch 1,
**dadurch gekennzeichnet,**
**dass** die Hauptschneidkante (9) und die Nebenschneidkante (8) sowie der Stufengrund (7) ein Dreieck aufspannen.

3. Schneidplatte nach Anspruch 1 oder 2,
**dadurch gekennzeichnet,**
**dass** die Spanformstufe (6) eine Spanfläche (13) ausbildet, die ausgehend von der Eckenschneidkante (10) zum Stufengrund (7) hin abfällt.

4. Schneidplatte nach einem der Ansprüche 1 bis 3,
**dadurch gekennzeichnet,**
**dass** die Spanformstufe (6) eine Spanrückenfläche (11) ausbildet, die ausgehend vom Stufengrund (7) zur Plattenoberfläche (2) hin ansteigt.

5. Schneidplatte nach einem der Ansprüche 1 bis 4,
**dadurch gekennzeichnet,**
**dass** der Stufengrund (7) der Spanformstufe (6) rinnenartig ausgebildet ist.

6. Schneidplatte nach einem der Ansprüche 1 bis 5,
**dadurch gekennzeichnet,**
**dass** der Stufengrund (7) der Spanformstufe (6) zur Hauptschneidkante (9) unter einem Winkel (δ) von größer oder gleich 45° bis kleiner 90°, insbesondere 70 ± 10°, verläuft.

7. Schneidplatte nach einem der Ansprüche 1 bis 6,
**dadurch gekennzeichnet,**
**dass** an der Nebenschneidkante (8) eine Schlicht- oder Planschneide (8', R_{w}) in Wiper-Geometrie ausgebildet ist.

8. Schneidplatte nach einem der Ansprüche 1 bis 7,
**dadurch gekennzeichnet**
**dass** der negative Spanwinkel (α) zwischen -6° und -20° beträgt.

9. Schneidplatte nach einem der Ansprüche 1 bis 8,
**gekennzeichnet durch**
einen positiven Seitenspanwinkel (β) zwischen der Plattenoberfläche (2) und dem Stufengrund (7) der Spanformstufe (6), wobei der positive Spanwinkel (β) zwischen +6° und +30° beträgt.

10. Schneidplatte nach einem der Ansprüche 1 bis 9,
**dadurch gekennzeichnet,**
**dass** die Hauptschneidkante (9) und die Nebenschneidkante (8) zueinander in einem spitzen Winkel (ϕ), insbesondere von etwa 80°, verlaufen.

11. Ausdrehwerkzeug (20), insbesondere mit Feineinstellvorrichtung (21), mit einer lösbar gehaltenen Schneidplatte (1) nach einem der Ansprüche 1 bis 10.

12. Ausdrehwerkzeug (20) nach Anspruch 11 mit einem lösbaren Bohr- oder Drehkopf (22), an dem die Schneidplatte (1) gehalten ist.

13. Ausdrehwerkzeug (20) nach Anspruch 11, an dem eine die Schneidplatte (1) aufnehmende Plattenkassette (26) lösbar befestigt ist.

## Claims

1. Cutting insert (1) comprising an insert surface (2) and insert side faces (5) and comprising a main cutting edge (9), adjoining a secondary cutting edge (8) via a corner cutting edge (10), and a chip breaker groove (6) provided in the region close to the corner and having a groove root (7) extending from the secondary cutting edge (8) to the main cutting edge (9), **characterized by** a negative rake angle (α) between the insert surface (2) and a secondary lip (8') in the course of the secondary cutting edge (8) towards the corner cutting edge (10).

2. Cutting insert according to Claim 1, **characterized in that** the main cutting edge (9) and the secondary cutting edge (8) and the groove root (7) define a triangle.

3. Cutting insert according to Claim 1 or 2, **characterized in that** the chip breaker groove (6) forms a rake face (13) which falls towards the groove root (7) starting from the corner cutting edge (10).

4. Cutting insert according to one of Claims 1 to 3, **characterized in that** the chip breaker groove (6) forms a back rake face (11) which rises towards the insert surface (2) starting from the groove root (7).

5. Cutting insert according to one of Claims 1 to 4, **characterized in that** the groove root (7) of the chip breaker groove (6) is of channel-like design.

6. Cutting insert according to one of Claims 1 to 5, **characterized in that** the groove root (7) of the chip breaker groove (6) runs at an angle (δ) of greater than or equal to 45° up to less than 90°, in particular 70 ± 10°, to the main cutting edge (9).

7. Cutting insert according to one of Claims 1 to 6, **characterized in that** a finishing or wiping lip (8', R_{w}) in wiper geometry is formed on the secondary cutting edge (8).

8. Cutting insert according to one of Claims 1 to 7, **characterized in that** the negative rake angle (α) is between -6° and -20°.

9. Cutting insert according to one of Claims 1 to 8, **characterized by** a positive side rake angle (β) between the insert surface (2) and the groove root (7) of the chip breaker groove (6), the positive rake angle (β) being between +6° and +30°.

10. Cutting insert according to one of Claims 1 to 9, **characterized in that** the main cutting edge (9) and the secondary cutting edge (8) run at an acute angle (ϕ), in particular of about 80°, to one another.

11. Boring tool (20), in particular having a fine-setting device (21), comprising a detachably held cutting insert (1) according to one of Claims 1 to 10.

12. Boring tool (20) according to Claim 11 having a detachable boring or turning head (22), on which the cutting insert (1) is held.

13. Boring tool (20) according to Claim 11, to which an insert cassette (26) accommodating the cutting insert (1) is detachably fastened.

## Revendications

1. Plaquette de coupe (1), comprenant une surface de plaquette (2) et des faces latérales de plaquette (5) ainsi qu'un bord de coupe principal (9) adjacent à un bord de coupe secondaire (8) par le biais d'un bord de coupe de coin (10), et un brise-copeaux (6) prévu dans la région proche du coin, avec une base de brise-copeaux (7) s'étendant depuis le bord de coupe secondaire (8) jusqu'au bord de coupe principal (9),
**caractérisée par**
un angle de coupe (α) négatif entre la surface de la plaquette (2) et une arête de coupe secondaire (8') dans le prolongement du bord de coupe secondaire (8) vers le bord de coupe de coin (10).

2. Plaquette de coupe selon la revendication 1,
**caractérisée en ce que**
le bord de coupe principal (9) et le bord de coupe secondaire (8) ainsi que la base de brise-copeaux (7) forment un triangle.

3. Plaquette de coupe selon la revendication 1 ou 2,
**caractérisée en ce que**
le brise-copeaux (6) constitue une face de coupe (13) qui diminue à partir du bord de coupe de coin (10) jusqu'à la base du brise-copeaux (7).

4. Plaquette de coupe selon l'une quelconque des revendications 1 à 3,
**caractérisée en ce que**
le brise-copeaux (6) constitue une face arrière de coupe (11) qui monte à partir de la base de brise-copeaux (7) jusqu'à la surface de la plaquette (2) .

5. Plaquette de coupe selon l'une quelconque des revendications 1 à 4,
**caractérisée en ce que**
la base de brise-copeaux (7) du brise-copeaux (6) est réalisée en forme de cannelure.

6. Plaquette de coupe selon l'une quelconque des revendications 1 à 5,
**caractérisée en ce que**
la base de brise-copeaux (7) du brise-copeaux (6) s'étend par rapport au bord de coupe principal (9) suivant un angle (δ) supérieur ou égal à 45° jusqu'à moins de 90°, en particulier de 70±10°.

7. Plaquette de coupe selon l'une quelconque des revendications 1 à 6,
**caractérisée en ce**
**qu'**une arête de coupe de finition ou plane (8', R_{w}) sur le bord de coupe secondaire (8) est réalisée avec une géométrie en forme de balai d'essuie-glace.

8. Plaquette de coupe selon l'une quelconque des revendications 1 à 7,
**caractérisée en ce que**
l'angle de coupe négatif (α) est compris entre -6° et -20°.

9. Plaquette de coupe selon l'une quelconque des revendications 1 à 8,
**caractérisée par**
un angle de coupe latéral positif (β) entre la surface de la plaquette (2) et la base de brise-copeaux (7) du brise-copeaux (6), l'angle de coupe positif (β) étant compris entre +6° et +30°.

10. Plaquette de coupe selon l'une quelconque des revendications 1 à 9,
**caractérisée en ce que** le bord de coupe principal (9) et le bord de coupe secondaire (8) s'étendent l'un par rapport à l'autre suivant un angle aigu (ϕ), notamment d'environ 80°.

11. Outil d'alésage (20), notamment avec un dispositif d'ajustement fin (21), comprenant une plaquette de coupe (1) maintenue de manière amovible selon l'une quelconque des revendications 1 à 10.

12. Outil d'alésage (20) selon la revendication 11, avec une tête d'alésage ou de tournage amovible (22), sur laquelle est fixée la plaquette de coupe (1).

13. Outil d'alésage (20) selon la revendication 11, sur lequel est fixée, de manière amovible, une cassette de plaquette (26) recevant la plaquette de coupe (1).
